# EUROPEAN PATENT APPLICATION

(11) **EP 4 844 347 A1**
(43) Date of publication of application: **25.11.2026**
(21) Application number: 26179902.7
(22) Date of filing: 20.05.2026
(51) Int. Cl.: G01F 1/66, G01F 15/02, G01F 15/18, G01K 1/00

(54) **DETERMINING THE TEMPERATURE OF AN OBJECT WITH AN ACOUSTIC FLOWMETER**

(30) Priority: 20.05.2025 US 202519213895
(71) Applicant: Baker Hughes Holdings LLC, Houston, TX 77073 (US)
(72) Inventor: Miceli, Joel, Billerica, Massachusetts 01821 (US)
(74) Representative: Grünecker Patent- und Rechtsanwälte PartG mbB

(57) **Abstract**

A flowmeter includes an ultrasonic transceiver with an acoustic emitter and receiver. The ultrasonic transceiver includes a wedge adjacent to the acoustic emitter and acoustic receiver. The wedge arranged to direct an acoustic signal towards a surface of the wedge arranged to be placed against an object to receive the acoustic signal at an angle less than 90° from a tangential plane of the object. The wedge defines a reflective window arranged to reflect the acoustic signal towards the acoustic receiver. A controller coupled to the transceiver is configured to transmit and received an acoustic signal through the wedge. The controller is configured to determine a time duration between transmitting the acoustic signal and receiving the acoustic signal and determine a temperature of an object based on the determined time duration.

## Description

### TECHNICAL FIELD

The subject matter described herein relates to clamp-on flowmeters.

### BACKGROUND

Clamp-on flow meters typically use one or more acoustic transducers. In operation, the one or more acoustic transducers are coupled to a conduit housing a fluid flow. It is typically assumed that the fluid is known, for example, the flow can include water, case, oil, or any other flowable fluid. The clamp-on flow meter is able to determine a flow velocity through the conduit through the one or more transducers. Certain properties of the fluid are typically manually input by a technician when setting up the flow meter. For example, the technician will typically input an interior radius, diameter, or area of the conduit. In some instances, the technician measures a temperature of the conduit. This temperature is used to determine a density of the fluid flowing through the conduit as fluid density is used to calculate flow velocities and/or indirect mass flow rates through the conduit.

### SUMMARY

An example implementation of the subject matter described within this disclosure is a flowmeter with the following features. The flow meter includes an ultrasonic transceiver with an acoustic emitter and an acoustic receiver. In some implementations, the acoustic transmitter and the acoustic receiver are a same component. For example, in some implementations, the acoustic emitter and/or the acoustic receiver are a piezoelectric device. In some implementations, a controller is coupled to the ultrasonic transceiver.

A wedge is adjacent to the acoustic emitter and acoustic receiver. The wedge is arranged to direct an acoustic signal towards a surface of the wedge arranged to be placed against an object. This surface is arranged to receive the acoustic signal at an angle less than 90° from a tangential plane of the object.

The wedge defines a reflective window arranged to reflect the acoustic signal towards the acoustic receiver. In some implementations, the wedge is made of a material denser than a surrounding environment. For example, in some implementations, the wedge includes a thermoplastic, and the surrounding environment includes air. The difference in density contributes to the acoustic signal's ability to be reflected within the wedge. The greater the difference in acoustic impedance is, the greater the reflected amplitude will be at the mediums interface. In some implementations, the reflective window includes a slot defined by the wedge. In some implementations, the reflective window includes an exposed surface of the wedge. In some implementations, the reflective window includes an air chamber defined by the wedge. The greatest results would occur using a vacuum rather than air, but typically air provides a sufficient difference in densities.

An example implementation of the subject matter described within this disclosure is a method with the following features. An acoustic signal is transmitted by the acoustic transmitter. The acoustic signal is reflected, for example, by the reflection window. The acoustic signal is received by the acoustic receiver. A time duration between transmitting the acoustic signal and receiving the acoustic signal is determined. A temperature of the object is determined based on the determined time duration.

The disclosed method can be implemented in a variety of ways. For example, within a system that includes at least one data processor and a non-transitory memory storing instructions for the processor to perform aspects of the method. Alternatively or in addition, the method can be included in non-transitory computer readable memory storing the method as instructions which, when executed by at least one data processor forming part of at least one computing system, causes the at least one data processor to perform operations of the method.

### BRIEF DESCRIPTION OF THE DRAWINGS

The accompanying drawings, which are incorporated in and constitute a part of this specification, show certain aspects of the subject matter disclosed herein and, together with the description, help explain some of the principles associated with the disclosed implementations.
FIG. 1 is a side cross-sectional view of an example acoustic transducer;
FIG. 2 is a perspective view of a wedge that can be used with aspects of this disclosure;
FIG. 3 is a side cross-sectional view of an example acoustic transducer;
FIG. 4 is a side cross-sectional view of an example acoustic transducer;
FIG. 5 is a block diagram of an example controller that can be used with aspects of this disclosure; and
FIG. 6 is a flowchart of an example method that can be used with aspects of this disclosure.

### DETAILED DESCRIPTION

Certain implementations will now be described to provide an overall understanding of the principles of the structure, function, manufacture, and use of the devices and methods disclosed herein. One or more examples of these implementations are illustrated in the accompanying drawings. Those skilled in the art will understand that the devices and methods specifically described herein and illustrated in the accompanying drawings are non-limiting implementations and that the scope of the present invention is defined solely by the claims. The features illustrated or described in connection with one implementation may be combined with the features of other implementations. Such modifications and variations are intended to be included within the scope of the present invention.

Further, in the present disclosure, like-named components of the implementations generally have similar features, and thus within a particular implementation each feature of each like-named component is not necessarily fully elaborated upon. Additionally, to the extent that linear or circular dimensions are used in the description of the disclosed systems, devices, and methods, such dimensions are not intended to limit the types of shapes that can be used in conjunction with such systems, devices, and methods. A person skilled in the art will recognize that an equivalent to such linear and circular dimensions can easily be determined for any geometric shape. Sizes and shapes of the systems and devices, and the components thereof, can depend at least on the anatomy of the subject in which the systems and devices will be used, the size and shape of components with which the systems and devices will be used, and the methods and procedures in which the systems and devices will be used.

Manual temperature measurements of a conduit take time and provide opportunity for error. Such measurement errors, if input into a clamp-on flow meter, can lead to incorrect flow velocity and/or mass flow rate measurements by the clamp-on flow meter. The present disclosure describes a flowmeter capable of measuring a temperature of a conduit on which the one or more transducers are clamped. The flowmeter measures the temperature acoustically by taking advantage of the relationship of temperature, thermal expansion of the wedge, and its sound speed as a function of temperature of a sensing end of the one or more transducers. The flowmeter sends an acoustic pulse within the transducer sensing end and measures a time duration, or delay, between transmitting the acoustic pulse and receiving a reflected acoustic pulse. This time duration is correlated with a temperature of the conduit, or other object, upon which the one or more transducers are clamped.

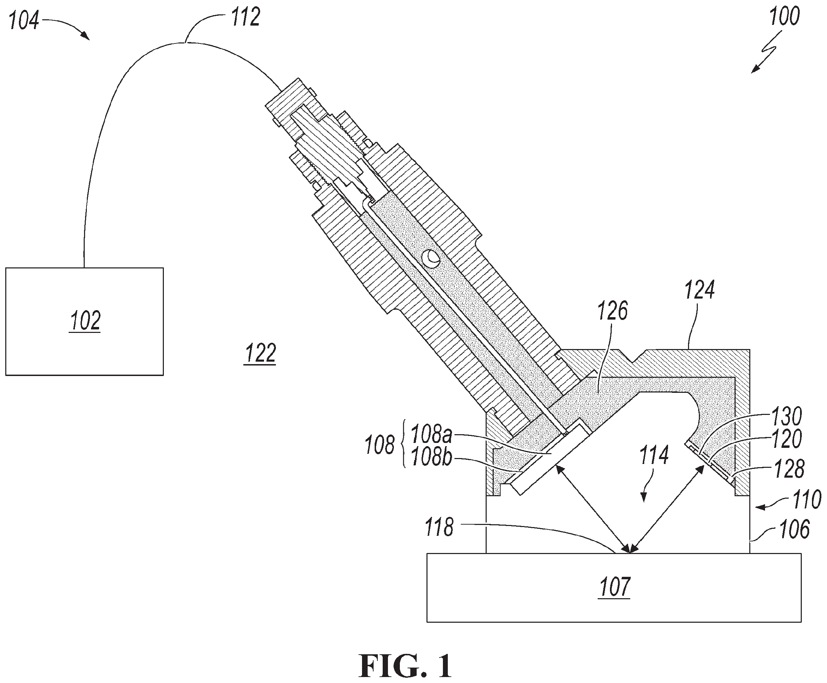

FIG. 1 is a side cross-sectional view of an example acoustic transceiver 100 coupled to a controller 102. The combination of the controller 102 and the transceiver 100 make up a part of a flowmeter 104. In operation, a technician takes the controller 102 and the transceiver 100 and straps and/or clamps the transceiver 100 to a conduit. In some implementations, more than one transceiver is used. Regardless of the number of transceivers used, the controller 102 is then able to interpret signals from the transceiver(s) 100 to determine a flowrate through an object 107, such as a conduit. More details about the controller 102 are described later within this disclosure.

Focusing on the transceiver 100, an acoustic emitter 108a and an acoustic receiver 108b are housed within a sensing end 110. In the illustrated implementation, the acoustic emitter 108a and the acoustic receiver 108b are a same piezoelectric device 108; however, implementations that use a separate acoustic transmitter 108a and acoustic transmitter 108b can be used without departing from this disclosure. In some implementations, separate acoustic transmitters 108a and acoustic receivers 108b are housed in separate acoustic transceivers. The acoustic transmitter/receiver 108 is coupled to the controller 102, for example, through a cable 112. In some implementations, the controller 102 and/or transceiver 100 are configured for and rated to be used in a hazardous or explosive environment. The controller 102 is configured to exchange signals with piezoelectric device 108. For example, in some instances, the controller 102 sends a signal to the piezoelectric device 108, causing the piezoelectric device 108 to produce an acoustic signal 114. In some instances, the piezoelectric device 108 receives an acoustic signal 114, causing the piezoelectric device 108 to produce a signal indicative of the received acoustic signal 114. Such a signal can then be received and interpreted by the controller 102.

Adjacent to the piezoelectric device 108 is a wedge 116 arranged to direct the acoustic signal towards a surface 118 of the wedge 116 arranged to be placed against the object 107. In the illustrated implementation, the object 107 and the surface 118 are arranged to receive the acoustic signal 114 at an angle less than 90° from a tangential plane of the object 107. Other incident angles can be used without departing from this disclosure. The wedge 106 includes and/or defines a reflective window 120 arranged to reflect the acoustic signal 114 towards the acoustic receiver 108b. A difference in density between the wedge 106 and an ambient environment 122 encourages acoustic signals 114 to reflect and remain within the wedge 106. For example, in some implementations, the wedge 106 includes a material that is significantly denser than the surrounding environment. Some examples of materials with a sufficient difference in densities for such a phenomena to occur include a wedge 106 that includes or is fully made up of a thermoplastic with an outside environment 122 including air. Other wedge-environment pairs can be used without departing from this disclosure so long as the difference in density between the wedge 106 and the outside environment 122 is sufficient to allow for internal reflections within the wedge 106 The sealed air volume 130 contain any liquid or gas that creates sufficient acoustic impedance difference with the wedge 106 and could able be replaced with a vacuum sealed volume without departing from this disclosure.

In the illustrated implementation, the sensing end 110 is potted. That is, the sensing end 110 is coupled to a housing 124 filled with a resin 126 or other filler. Such an arrangement can be used, for example, in a hazardous and/or explosive environment as electrical interfaces, such as an interface between the wire 112 and the piezoelectric device 108, are sealed from the outside environment 122 by the resin.

Reflections within the wedge 106 are used to determine a variety of information about the object 107. For example, measuring a time duration between a transmission of the acoustic signal 114 and subsequently receiving the acoustic signal 114 can be used to determine parameters, such as a temperature of the object 107 and/or a fluid flowing through the object 107. Such determinations are possible due to the thermal expansion/contraction of the wedge 106. That is, a time duration between transmitting the acoustic signal 114 and receiving the acoustic signal 114 is correlated to the thermal expansion/contraction and sound speed of the wedge 106, which is corelated to a temperature of the wedge 107. As such, because a thermal expansion coefficient and sound speed relationship of the wedge 106 is known, a temperature can be calculated based on the time duration between transmitting the acoustic signal 114 and receiving the acoustic signal 114.

Such determinations are made assuming a relatively fixed path for the acoustic signal 114. To ensure such consistency, the wedge 106 includes and/or defines the reflective window 120 oriented to reflect the acoustic signal 114 back to the piezoelectric device 108. In the illustrated implementation, a frame 128 defines an air pocket 130 within the resin 126. The density differential between the wedge 206 and the air pocket 130 combined with the substantially steep incidence angle (e.g. 90° plus or minus 3 °) cause the acoustic signal 114 to reflect and return to the piezoelectric device 108 across a return path that is substantially identical to the transmission path (depending on the angle of incidence).

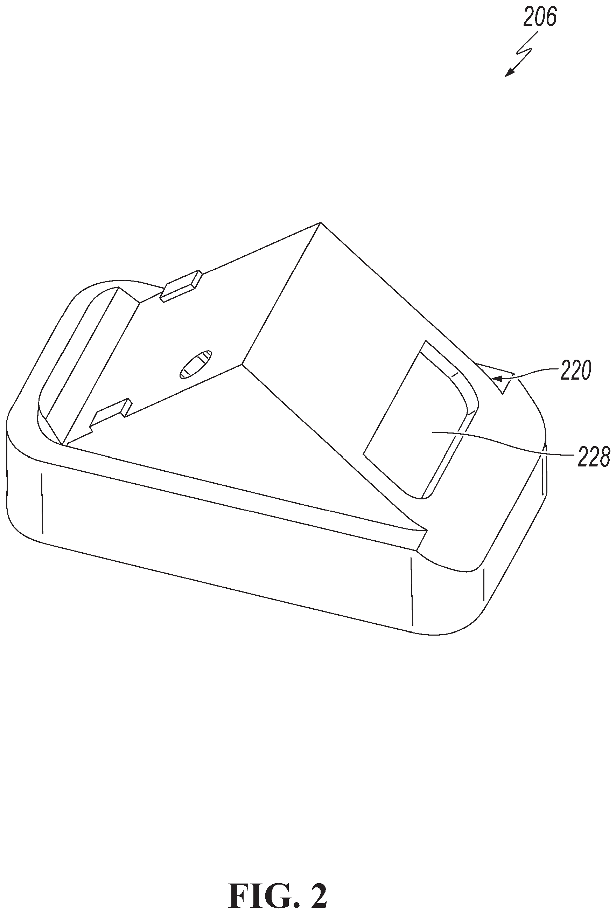

FIG. 2 is a perspective view of a wedge 206 that can be used with aspects of this disclosure. The wedge 206 is substantially similar to the wedge 106 previously described with the exception of any differences described herein. The wedge 206 is illustrated as a stand-alone component prior to installation on a sensing end of a transceiver. In the illustrated implementation, the reflection window 220 is a slot 228 defined by the wedge 206. This allows for the wedge 206 to be used in an implementation that immerses the wedge, for example, in resin 126 (FIG. 1).

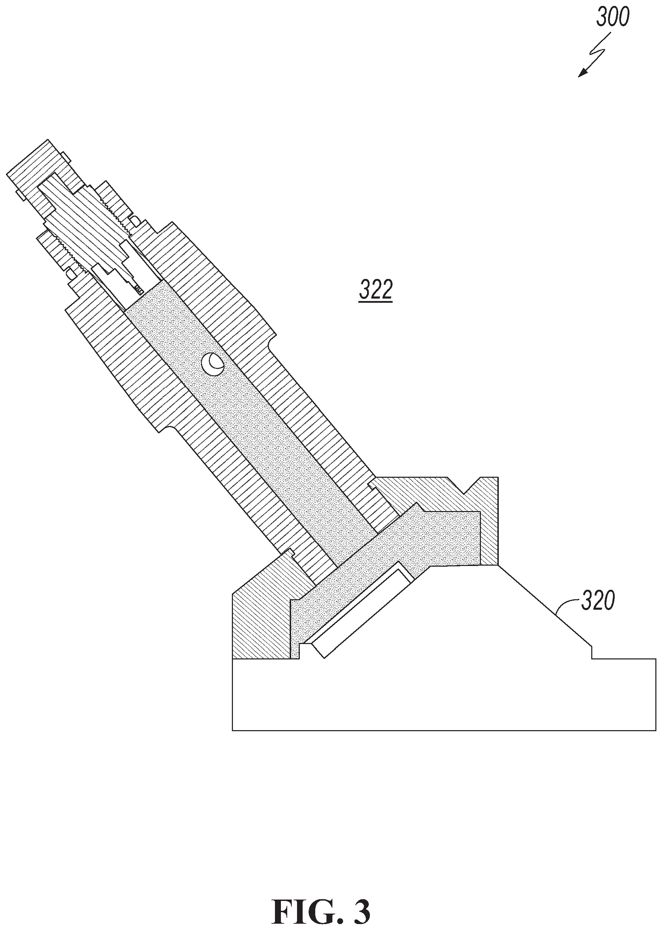

FIG. 3 is a side cross-sectional view of an example acoustic transducer 300. The acoustic transducer 300 is substantially similar to the acoustic transducer 100 previously described with the exception of any differences described herein. The transducer 300 is not potted, as such, a surface 320 of the wedge is adjacent to or exposed an outside environment 322 (e.g., air or other gases). The density differential allows the surface 320 to act as a reflective window without the need for additional slots or air pockets.

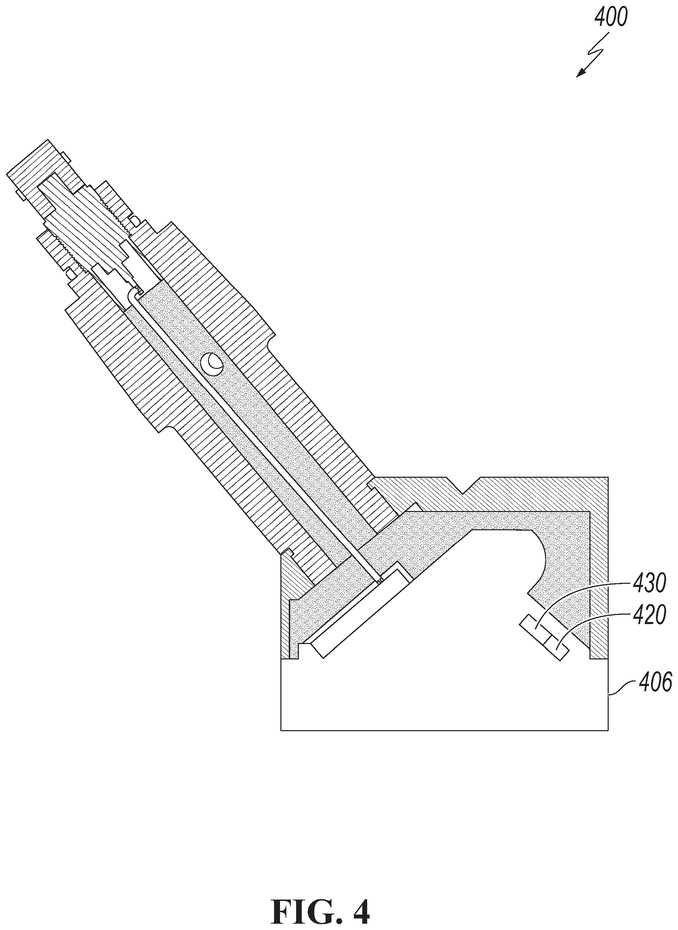

FIG. 4 is a side cross-sectional view of an example acoustic transducer 400. The transducer 400 is substantially similar to the transducer 100 previously described with the exception of the differences recited herein. In the illustrated implementation, a reflective window 420 is defined by the wedge 406 to produce an air chamber 430 within the wedge 406. Such an air chamber 430 can be formed through a variety of manufacturing techniques, for example, by additive manufacturing (e.g., stereolithography printing). Alternatively or in addition, a separate piece of wedge material can define a portion of the air chamber 430. In such implementations, the second piece of wedge material can be attached to the main wedge, by, for example, ultrasonic welding or an adhesive with acoustic properties substantially similar to the wedge pieces (within standard manufacturing tolerances).

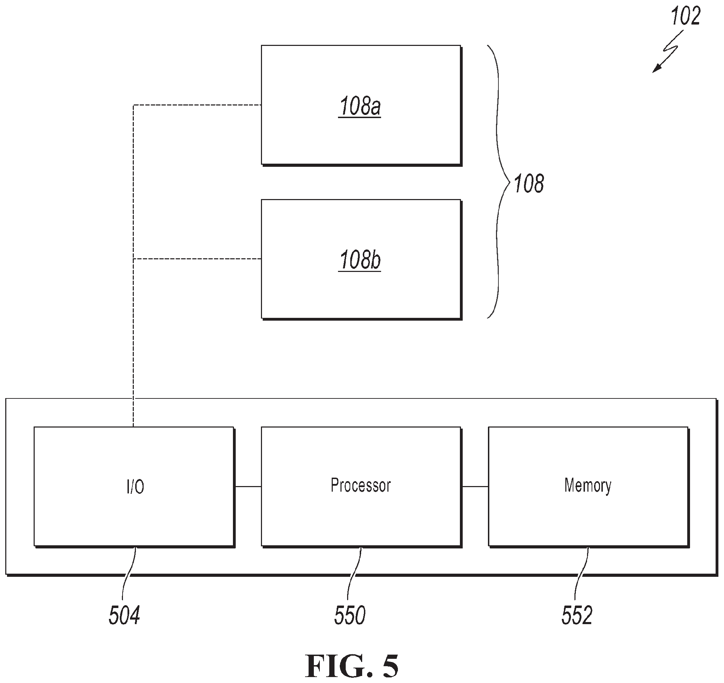

FIG. 5 is a block diagram of the example controller 102 that can be used with aspects of this disclosure. The controller 102 can, among other things, monitor parameters of the flowmeter 104, send signals to actuate and/or adjust various operating parameters of such systems. As shown in FIG. 5, the controller 102 can include one or more processors 550 and non-transitory computer readable memory storage (e.g., memory 552) containing instructions that cause the processors 550 to perform operations. The processors 550 are coupled to an input/output (I/O) interface 554 for sending and receiving communications with components in the system, including, for example, the acoustic transmitter 108a or the acoustic receiver 108b. In certain instances, the controller 102 can additionally communicate status with and send actuation and/or control signals to one or more of the various system components (including, for example, the piezoelectric device 108) of the flowmeter 104, as well as other sensors (e.g., pressure sensors, temperature sensors, vibration sensors, and other types of sensors) that provide signals to the flow meter 104.

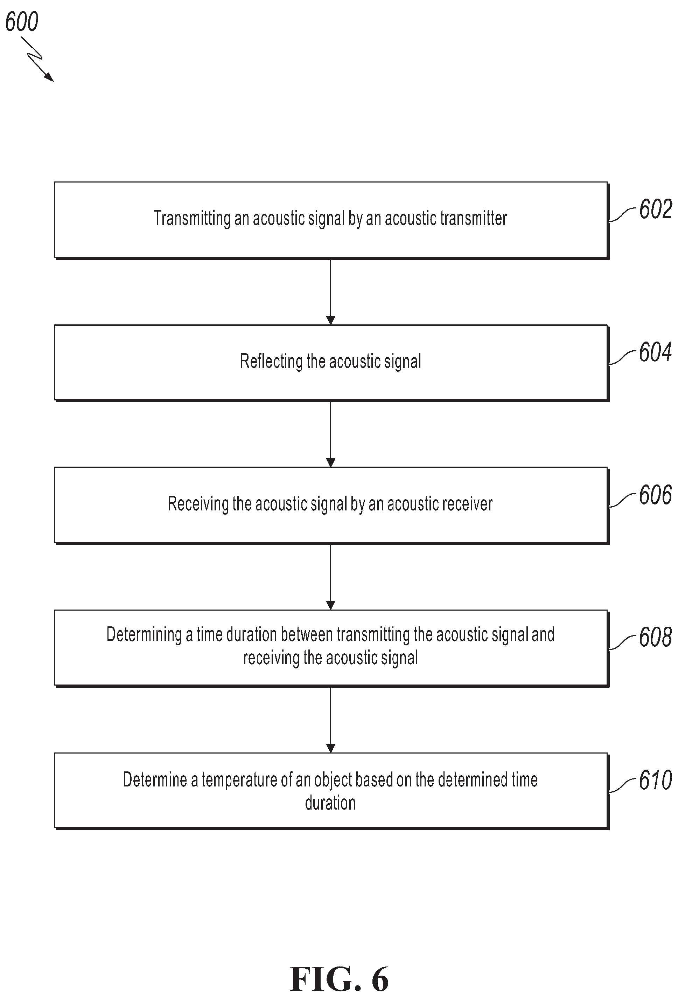

FIG. 6 is a flowchart of an example method 600 according to some example implementations. Aspects of the method 600 can be performed by the controller 102 all or in part. At 602, an acoustic signal is transmitted by an acoustic transmitter. At 604, the acoustic signal is reflected. Reflecting the acoustic signal occurs at a medium-environment interface. For example, in some implementations, the medium includes a thermoplastic formed into an acoustic wedge while the environment includes air. The interface allows for reflection due, at least in part, to a difference in densities between the medium and the environment.

At 606, the acoustic signal is received by an acoustic receiver. As a reminder, in some implementations, the acoustic transmitter and the acoustic receiver can be integrated into a single component. While primarily illustrated and described as being a piezoelectric device, other acoustic emitter/receiver technologies can be used without departing from this disclosure. For example, in some implementations, a magnet and coil style transducer or an electrostatic transducer can be used.

At 606, a time duration between transmitting the acoustic signal and receiving the acoustic signal is determined. At 608, a temperature of an object is determined based on the determined time duration. The temperature of the object is typically correlated with a temperature of a fluid flowing through the object using know sound speed properties at different temperatures of the wedge. A density of such a fluid can be determined based at least in part on the determined temperature. Using this information, the transducers can be used to determine a flowrate through the object without needing to input temperature manually (e.g., by a technician) or through an analog or digital input.

While this disclosure contains many specific implementation details, these should not be construed as limitations on the scope of what may be claimed, but rather as descriptions of features specific to particular implementations of particular inventions. Certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the implementations described above should not be understood as requiring such separation in all implementations, and it should be understood that the described components and systems can generally be integrated together in a single product or packaged into multiple products.

Thus, particular implementations of the subject matter have been described. Other implementations are within the scope of the following claims. In some cases, the actions recited in the claims can be performed in a different order and still achieve desirable results. In addition, the processes depicted in the accompanying figures do not necessarily require the particular order shown, or sequential order, to achieve desirable results.

Other implementations can be within the scope of the following claims.

## Claims

1. An ultrasonic transceiver comprising:
an acoustic emitter;
an acoustic receiver; and
a wedge adjacent to the acoustic emitter and acoustic receiver, the wedge arranged to direct an acoustic signal towards a surface of the wedge arranged to be placed against an object to receive the acoustic signal at an angle less than 90° from a tangential plane of the object, the wedge defining a reflective window arranged to reflect the acoustic signal towards the acoustic receiver.

2. The ultrasonic transceiver of claim 1, wherein the wedge comprises a material denser than a surrounding environment.

3. The ultrasonic transceiver of claim 2, wherein the wedge comprises thermoplastic.

4. The ultrasonic transceiver of claim 1, wherein the reflective window comprises a slot defined by the wedge; or wherein the reflective window comprises an exposed surface of the wedge; or wherein the reflective window comprises an air chamber defined by the wedge.

5. The ultrasonic transceiver of claim 1, wherein the acoustic emitter and the acoustic receiver are a same component.

6. The ultrasonic transceiver of claim 1, wherein the acoustic emitter or the acoustic receiver is a piezoelectric device.

7. A method comprising:
transmitting an acoustic signal by an acoustic transmitter;
reflecting the acoustic signal;
receiving the acoustic signal by an acoustic receiver;
determining a time duration between transmitting the acoustic signal and receiving the acoustic signal; and
determine a temperature of an object based on the determined time duration.

8. The method of claim 7, wherein reflecting the acoustic signal comprises a medium-environment interface.

9. The method of claim 8, wherein the environment comprises air; or wherein the medium comprises a thermoplastic.

10. A flowmeter comprising:
an ultrasonic transceiver comprising:
an acoustic emitter;
an acoustic receiver;
a wedge adjacent to the acoustic emitter and acoustic receiver, the wedge arranged to direct an acoustic signal towards a surface of the wedge arranged to be placed against an object to receive the acoustic signal at an angle less than 90° from a tangential plane of the object, the wedge defining a reflective window arranged to reflect the acoustic signal towards the acoustic receiver; and
a controller configured to:
transmit an acoustic signal by an acoustic transmitter;
reflect the acoustic signal;
receive the acoustic signal by an acoustic receiver;
determine a time duration between transmitting the acoustic signal and receiving the acoustic signal; and
determine a temperature of an object based on the determined time duration and correlation of temperature to wedge sound speed and thermal expansion.

11. The flowmeter of claim 10, wherein the wedge comprises a material denser than a surrounding environment.

12. The flowmeter of claim 11, wherein the wedge comprises thermoplastic.

13. The flowmeter of claim 10, wherein the reflective window comprises a slot defined by the wedge; or wherein the reflective window comprises an exposed surface of the wedge; or wherein the reflective window comprises an air chamber defined by the wedge.

14. The flowmeter of claim 10, wherein the acoustic emitter and the acoustic receiver are a same component.

15. The flowmeter of claim 10, wherein the acoustic emitter or the acoustic receiver is a piezoelectric device.
